# EUROPEAN PATENT SPECIFICATION

(11) **EP 3 476 515 B1**
(45) Date of publication and mention of the grant of the patent: **27.07.2022**
(21) Application number: 18201946.3
(22) Date of filing: 23.10.2018
(51) Int. Cl.: B23K 1/00, B23K 1/005, B23K 3/08, B23K 37/04, H01R 4/02, H01R 43/02, B23K 101/38

(54) **SOLDERING SYSTEM**
LÖTANLAGE
SYSTÈME DE BRASAGE

(30) Priority: 25.10.2017 CN 201711007570
(43) Date of publication of application: 01.05.2019
(73) Proprietor: Tyco Electronics (Shanghai) Co. Ltd., Shanghai (CN); TE Connectivity Corporation, Berwyn, PA 19312 (US); TE Connectivity Germany GmbH, 64625 Bensheim (DE); MEAS France, 31300 Toulouse (FR); Kunshan League Automechanism Co., Ltd., Kunshan City Jiangsu (CN); Shenzhen AMI Technology Co. Ltd, Shenzhen Guangdong 518108 (CN)
(72) Inventor: DENG, Yingcong, SHANGHAI, 200233 (CN); ZHANG, Dandan, SHANGHAI, 200233 (CN); HU, Lvhai, SHANGHAI, 200233 (CN); GLASER, Karlheinz, 64625 Bensheim, Hessen (DE); SKURJATIN, Valentin, 67346 Speyer, Rheinland-Pfalz (DE); BOUMEDDANE, Hamza, 77610 Fontenay-Trésigny (FR); WIECHERT, Sebastian, 67346 Speyer, Rheinland-Pfalz (DE); PECQUET, Nicolas Christophe R, 77610 Fontenay-Trésigny (FR); BROCH, Eric, 77610 Fontenay-Trésigny (FR); LIU, Yun, SHANGHAI, 200233 (CN); LU, Roberto Francisco-Yi, Bellevue,, WA Washington 98006 (US); WU, Haidong, Kunshan City,, Jiangsu (CN); ZENG, Qinglong, Shenzhen,, Guangdong 518000 (CN)
(74) Representative: Grünecker Patent- und Rechtsanwälte PartG mbB

(56) References cited:
- WO-A1-2013/047883
- WO-A1-2015/121774
- WO-A2-2015/028909
- DE-A1- 2 036 429
- US-A- 5 393 932
- US-A- 5 974 643
- US-A1- 2014 076 956
- US-A1- 2017 100 795

## Description

### BACKGROUND OF THE INVENTION

### Field of the Invention

Embodiments of the present disclosure relate to a soldering system, particularly, to a soldering system for soldering the first lead and the second lead together.

### Description of the Related Art

In the technical field of manufacturing a connector, it is desired, generally, to insert a first lead and a second lead into a housing from both sides of the housing, respectively, and then to solder ends of the inserted first lead and the second lead together. This is for example shown in US5393932 A, which forms the basis for the preamble of the independent claims.

In order to ensure the soldering quality, the ends of the inserted first lead and the second lead should be aligned and brought into contact with each other. Consequently, before soldering, it is required to first detect whether the alignment tolerance between the first lead and the second lead is within a predetermined tolerance value (allowable tolerance value); and if the alignment tolerance between the first lead and the second lead is larger than the predetermined tolerance value, the soldering quality will be lowered, even will cause soldering failure. Moreover, before soldering, it is also ensured that end faces of the first lead and the second lead are in physical contact; and if there is a gap between the first lead and the second lead, this will also lower the soldering quality between the first lead and the second lead, even will cause soldering failure.

In the relevant art, the soldering operation between the first lead and the second lead is usually performed manually. Generally, the worker needs to visually align the first lead and the second lead, and then hold the aligned first lead and the second lead by hand or a pressing device, and finally use the laser head to solder the first lead and the first lead together. The two leads are soldered together. Such a manual soldering method is very inefficient, neither ensures that the alignment tolerance between the leads is within the allowable tolerance values, nor ensures that the end faces of the leads are in a physical contact, thereby lowering the soldering quality of the leads.

In WO 2015/028909 A1, a program-controlled automatic soldering system and method is disclosed, which comprises a laser source emitting a laser beam which is focused on a target position in a work area and a moving device which is configured to move products under guidance of the vision system to a position where the products are soldered. Further, documents WO 2015/121774 A1, US 5,974,643 A, and US 2014/0076956 A1 also disclose soldering machines with positioning means guided by visual detection means. Document US 2017/0100795 A1 discloses a robotic gripper sensor applied in a wire soldering device including a laser and computer vision system cameras for adjusting the position of objects to be soldered.

### SUMMARY OF THE INVENTION

An objective of the present disclosure is to solve at least one aspect of the above mentioned problems and disadvantages occurred in the prior art.

According to an aspect of the present disclosure, there is provided a soldering system according to claim 1.

According to an exemplary embodiment of the present disclosure, the second tool is adapted to press or hold the first lead and the second lead when the alignment tolerance between the first lead and the second lead is detected by the vision system.

According to a further exemplary embodiment of the present disclosure, the first robot is adapted to move at least one of the first lead and the second lead by the first tool under the guidance of the vision system, in order to reduce the alignment tolerance between the first lead and the second lead to the predetermined tolerance value.

According to a further exemplary embodiment of the present disclosure, the vision system is integrated to and moved with the second robot so as to avoid interference between the vision system and the first robot and the second robot.

According to a further exemplary embodiment of the present disclosure, the first robot has a rotary disc on which the first tool and the second tool are mounted, so that one of the first tool and the second tool is rotated to an operating position by rotating the rotary disc.

When the first lead and the second lead are pressed or held by the second tool, an end face of the first lead and an end face of the second lead are may in a physical contact with each other.

According to a further exemplary embodiment of the present disclosure, the electrical product is an electrical connector comprising a housing, a first connecting piece having the first lead and a second connecting piece having the second lead, the first connecting piece and the second connecting piece being assembled to the housing.

According to a further exemplary embodiment of the present disclosure, the soldering system determines a precise soldering position of the first lead and the second lead based on positions, shapes and sizes of the first lead and the second lead identified by the vision system; and the second robot is adapted to move the laser solder head to the precise soldering position under the guidance of the vision system.

According to another aspect of the present disclosure, there is provided a soldering method according to claim 8.

According to an exemplary embodiment of the present disclosure, the step S80 comprises steps of:
S81: identifying positions, shapes and sizes of the first lead and the second lead by the vision system, and determining the precise soldering position of the first lead with the second lead based on the identified positions, shapes and sizes;
S82: moving the laser solder head to the precise soldering position under the guidance of the vision system by the second robot; and
S83: activating the laser solder head to solder the first lead and the second lead together.

In the above exemplary embodiments of the present disclosure, a set of soldering system may automatically complete operation of soldering the first lead and the second lead together, thereby improving the efficiency of soldering the leads and increasing the soldering quality of the leads.

Other objectives and advantages of the present disclosure will become apparent from the following description of the present disclosure when taken in conjunction with the accompanying drawings, and may give a comprehensive understanding of the present disclosure.

### BRIEF DESCRIPTION OF THE DRAWINGS

The above and other features of the present disclosure will become more apparent by describing in detail exemplary embodiments thereof with reference to the accompanying drawings, in which:
Fig. 1 shows an illustrative perspective view of a soldering system according to an exemplary embodiment of the present disclosure;
Fig. 2 shows a partial enlarged schematic view of the soldering system as shown in Fig. 1;
Fig. 3 shows an illustrative perspective view of a first robot of the soldering system as shown in Fig. 1; and
Fig. 4 shows an enlarged schematic view of an area A as shown in Fig. 3.

### DETAILED DESCRIPTION OF PREFERRED EMBODIMENTS OF THE INVENTION

The technical solution of the present disclosure will be described hereinafter in further detail with reference to the following embodiments, taken in conjunction with the accompanying drawings. In the specification, the same or similar reference numerals indicate the same or similar parts. The description of the embodiments of the present disclosure hereinafter with reference to the accompanying drawings is intended to explain the general inventive concept of the present disclosure, and should not be constructed as a limitation to the present disclosure.

In addition, in the following detailed description, for the sake of explanation, numerous specific details are set forth in order to provide a thorough understanding of the disclosed embodiments. It will be apparent, however, one or more embodiments may also be practiced without these specific details. In other instances, well-known structures and devices are illustrated schematically in order to simplify the drawing.

According to the invention of the present disclosure, there is provided a soldering system, comprising: a first robot on which a first tool and a second tool are mounted; a second robot on which a laser solder head is mounted; a fixation device adapted to fix an electrical product with a first lead and a second lead to be soldered; and a vision system adapted to identify positions of the first lead and the second lead and detect an alignment tolerance between them. When the alignment tolerance between the first lead and the second lead detected by the vision system is larger than a predetermined tolerance value, the first robot moves at least one of the first lead and the second lead by the first tool to reduce the alignment tolerance; when the alignment tolerance between the first lead and the second lead detected by the vision system is within the predetermined tolerance value, the first robot presses or holds the first lead and the second lead by the second tool; and when the alignment tolerance between the first lead and the second lead is within the predetermined tolerance value, and the first lead and the second lead have been pressed or held by the second tool, the second robot moves the laser solder head to a predetermined position under the guidance of the vision system, and solders the first lead and the second lead together by the laser solder head.

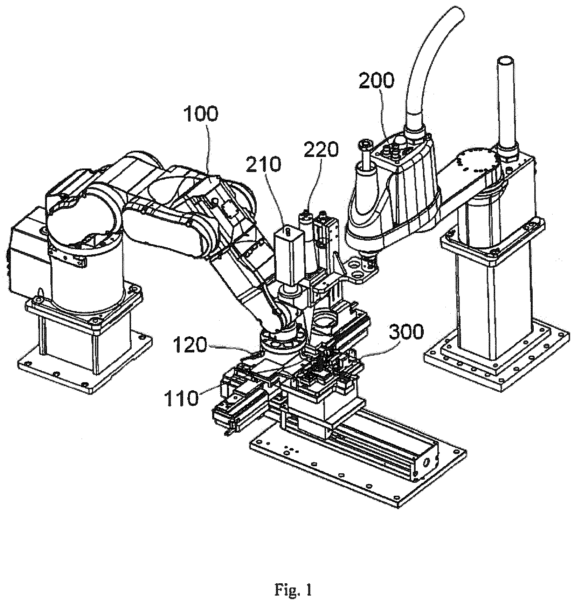

Fig. 1 shows an illustrative perspective view of a soldering system according to an exemplary embodiment of the present disclosure.

As shown in Fig. 1, in an illustrated embodiment, the soldering system mainly includes a first robot 100, a second robot 200, a fixation device 300 and a vision system 210.

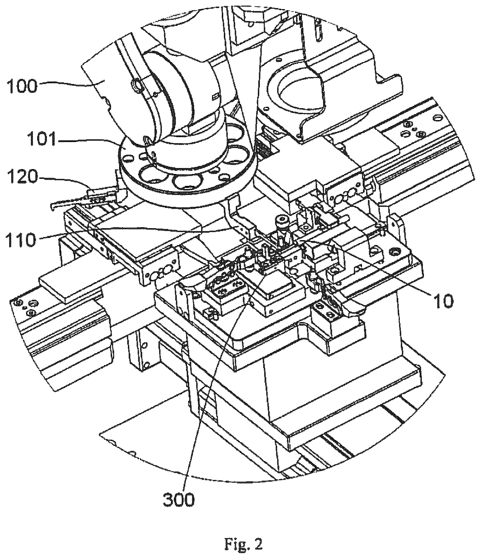

Fig. 2 shows a partial enlarged schematic view of the soldering system as shown in Fig. 1.

As shown in Figs. 1 and 2, in an illustrated embodiment, a first tool 110 and a second tool 120 are mounted on the first robot 100. A laser solder head 220 is mounted on the second robot 200.

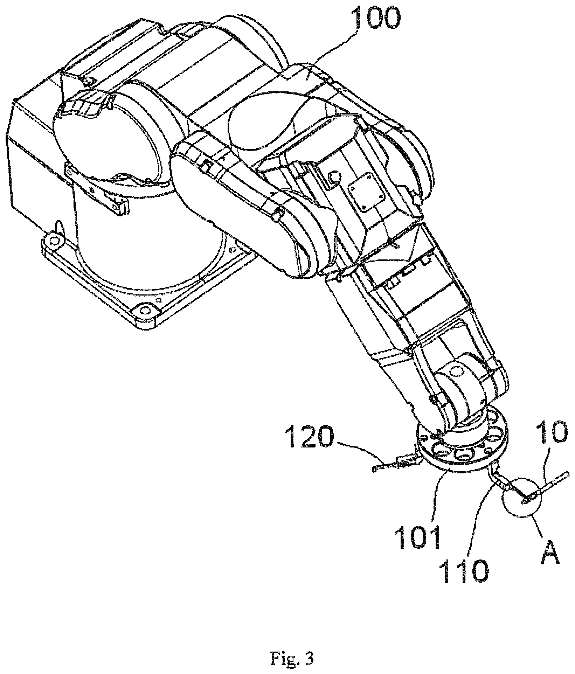

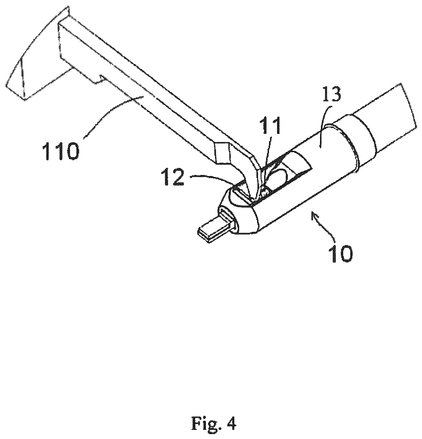

Fig. 3 shows an illustrative perspective view of a first robot of the soldering system as shown in Fig. 1; and Fig. 4 shows an enlarged schematic view of an area A as shown in Fig. 3.

As shown in Figs. 1-4, in an illustrated embodiment, the fixation device 300 is adapted to fix an electrical product 10 with a first lead 11 and a second lead 12 to be soldered. The vision system 210 is adapted to identify positions of the first lead 11 and the second lead 12 and detect an alignment tolerance between them.

As shown in Figs. 1-4, in an illustrated embodiment, when the alignment tolerance between the first lead 11 and the second lead 12 detected by the vision system 210 is larger than a predetermined tolerance value, the first robot 100 moves at least one of the first lead 11 and the second lead 12 by the first tool 110 to reduce the alignment tolerance.

As shown in Figs. 1-4, in an illustrated embodiment, when the alignment tolerance between the first lead 11 and the second lead 12 detected by the vision system 210 is within the predetermined tolerance value, the first robot 100 presses or holds the first lead 11 and the second lead 12 by the second tool 120.

As shown in Figs. 1-4, in an illustrated embodiment, when the alignment tolerance between the first lead 11 and the second lead 12 is within the predetermined tolerance value, and the first lead 11 and the second lead 12 have been pressed or held by the second tool 120, the second robot 200 moves the laser solder head 220 to a predetermined position under the guidance of the vision system 210, and solders the first lead 11 and the second lead 12 together by the laser solder head 220.

As shown in Figs. 1-4, in an illustrated embodiment, when the alignment tolerance between the first lead 11 and the second lead 12 is detected by the vision system 210, the first lead 11 and the second lead 12 are pressed or held by the second tool 120.

As shown in Figs. 1-4, in an illustrated embodiment, the first robot 100 is adapted to move at least one of the first lead 11 and the second lead 12 by the first tool 110 under the guidance of the vision system 210, in order to reduce the alignment tolerance between the first lead 11 and the second lead 12 to the predetermined tolerance value.

As shown in Figs. 1-4, in an illustrated embodiment, the vision system 210 is integrated to and moved with the second robot 200 so as to avoid interference between the vision system 210 and the first robot 100 and the second robot 200. However, the present disclosure is not limited to this, and the vision system 210 may be separately mounted above the fixation device 300, as long as no interference occurs between the vision system 210 and the first robot 100 and the second robot 200.

As shown in Figs. 1-4, in an illustrated embodiment, the first robot 10 has a rotary disc 101 on which the first tool 110 and the second tool 120 are mounted. Accordingly, by rotating the rotary disc 101, one of the first tool 100 and the second tool 200 is rotated to an operating position.

As shown in Figs. 1-4, in an illustrated embodiment, when the first lead 11 and the second lead 12 are pressed or held by the second tool 120, an end face of the first lead 11 and an end face of the second lead 12 are in a physical contact with each other.

As shown in Figs. 1-4, in an illustrated embodiment, the electrical product 10 is an electrical connector that may comprise a housing 13, a first connecting piece having the first lead 11 and a second connecting piece having the second lead 12. The first connecting piece and the second connecting piece are assembled to the housing 13.

As shown in Figs. 1-4, in an illustrated embodiment, the soldering system may determine a precise soldering position of the first lead 11 and the second lead 12 based on positions, shapes and sizes of the first lead 11 and the second lead 12 identified by the vision system 210. The second robot 200 is adapted to move the laser solder head 220 to the precise soldering position under the guidance of the vision system 210. In this way, the first lead 11 and the second lead 12 may be precisely soldered together.

A soldering method according to the invention of the present disclosure will be illustrated hereinafter with reference to Figs. 1-4, the soldering method comprising the following steps:
S10: providing the above-mentioned soldering system;
S20: completing an assembly of the electrical product 10 and fixing the electrical product 10 on the fixation device 300;
S30: pressing or holding the first lead 11 and the second lead 12 of the electrical product 10 to be soldered by the second tool 120 of the first robot 100;
S40: detecting the alignment tolerance between the first lead 11 and the second lead 12 by the vision system 210, and,
   if the detected alignment tolerance is larger than the predetermined tolerance value, then
      S50: releasing the first lead 11 and the second lead 12 by putting the second tool 120 back off, and moving at least one of the first lead 11 and the second lead 12 by the first tool 110 to reduce the alignment tolerance between the first lead 11 and the second lead 12;
      S60: removing the first tool 110 away from the first lead 11 and the second lead 12 and pressing or holding the first lead 11 and the second lead 12 by the second tool 120; and
      S70: back to step S40;; and
   if the detected alignment tolerance is within the predetermined tolerance value, then
      S80: moving the laser solder head 220 to the precise soldering position under guidance of the vision system 210 by the second robot 200, and soldering the first lead 11 and the second lead 12 together by the laser solder head 220.

In an exemplary embodiment of the present disclosure, the step S80 may comprise:
S81: identifying the positions, shapes and sizes of the first lead 11 and the second lead 12 by the vision system 210, and determining the precise soldering position of the first lead 11 and the second lead 12 based on the identified positions, shapes and sizes;
S82: moving the laser solder head 220 to the precise soldering position under the guidance of the vision system 210 by the second robot 200; and
S83: activating the laser solder head 220 to solder the first lead 11 and the second lead 12 together.

It should be appreciated by those skilled in the art that the above embodiments are intended to be illustrative, modifications may be made to the above embodiments by those skilled in the art, and structures described in various embodiments may be freely combined within the scope of the appended claims without having structural and principle conflict.

It should be noted that term "comprising" or "including" should be understood as not excluding other elements or steps, and term "a" or "an" should be understood as not excluding plural elements or steps.

## Claims

1. A soldering system, **characterized in that** it comprises:
a first robot (100) on which a first tool (110) and a second tool (120) are mounted;
a second robot (200) on which a laser solder head (220) is mounted;
a fixation device (300) adapted to fix an electrical product (10) with a first lead (11) and a second lead (12) to be soldered; and
a vision system (210) adapted to identify positions of the first lead (11) and the second lead (11) and detect an alignment tolerance between them;
wherein
the first robot (100) is adapted to move at least one of the first lead (11) and the second lead (12) by the first tool (110) to reduce the alignment tolerance when the alignment tolerance between the first lead (11) and the second lead (12) detected by the vision system (210) is larger than a predetermined tolerance value;
the first robot (100) is adapted to press or hold the first lead (11) and the second lead (12) by the second tool (120) when the alignment tolerance between the first lead (11) and the second lead (12) detected by the vision system (210) is within the predetermined tolerance value; and
the second robot (200) is adapted to move the laser solder head (220) to a predetermined position under guidance of the vision system, and is adapted to solder the first lead (11) and the second lead (12) together by the laser solder head (220) when the alignment tolerance between the first lead (11) and the second lead (12) is within the predetermined tolerance value, and the first lead (11) and the second lead (12) have been pressed or held by the second tool (120).

2. The soldering system according to claim 1, wherein,
the second tool (120) is adapted to press or hold the first lead (11) and the second lead (12) when the alignment tolerance between the first lead (11) and the second lead (12) is detected by the vision system (210).

3. The soldering system according to claim 1 or 2, wherein,
the first robot (100) is adapted to move at least one of the first lead (11) and the second lead (12) by the first tool (110) under the guidance of the vision system (210), in order to reduce the alignment tolerance between the first lead (11) and the second lead (12) to the predetermined tolerance value.

4. The soldering system according to any one of claims 1-3, wherein,
the vision system (210) is integrated to and moved with the second robot (200) so as to avoid interference between the vision system (210) and the first robot (100) and the second robot (200).

5. The soldering system according to any one of claims 1-4, wherein,
the first robot (100) has a rotary disc (101) on which the first tool (110) and the second tool (120) are mounted, so that one of the first tool (110) and the second tool (120) is rotated to an operating position by rotating the rotary disc (101).

6. The soldering system according to any one of claims 1-5, wherein,
the electrical product (10) comprises an electrical connector comprising a housing (13), a first connecting piece having the first lead (11) and a second connecting piece having the second lead (12), the first connecting piece and the second connecting piece being assembled to the housing (13).

7. The soldering system according to any one of claims 1-6, wherein,
the soldering system determines a precise soldering position of the first lead (11) and the second lead (12) based on positions, shapes and sizes of the first lead (11) and the second lead (12) identified by the vision system (210); and
the second robot (200) is adapted to move the laser solder head (220) to the precise soldering position under the guidance of the vision system (210).

8. A soldering method,
**characterized in that** it comprises the steps of:
S10: providing the soldering system according to any one of claims 1-7;
S20: completing an assembly of the electrical product (10) and fixing the electrical product (10) on the fixation device (300);
S30: pressing or holding the first lead (11) and the second lead (12) of the electrical product (10) to be soldered by the second tool (120) of the first robot (100);
S40: detecting the alignment tolerance between the first lead (11) and the second lead (12) by the vision system (210), and
if the detected alignment tolerance is larger than the predetermined tolerance value, then
S50: releasing the first lead (11) and the second lead (12) by putting the second tool (120) back off, and moving at least one of the first lead (11) and the second lead (12) by the first tool (110) to reduce the alignment tolerance between the first lead (11) and the second lead (12);
S60: removing the first tool (110) away from the first lead (11) and the second lead (12) and pressing or holding the first lead (11) and the second lead (12) by the second tool (120); and
S70: back to step S40; and
if the detected alignment tolerance is within the predetermined tolerance value, then
S80: moving the laser solder head (220) to the precise soldering position under the guidance of the vision system (210) by the second robot (200), and soldering the first lead (11) and the second lead (12) together by the laser solder head (220).

9. The soldering method according to claim 8, wherein, the step S80 comprises steps of:
S81: identifying positions, shapes and sizes of the first lead (11) and the second lead (12) by the vision system (210), and determining the precise soldering position of the first lead (11) with the second lead (12) based on the identified positions, shapes and sizes;
S82: moving the laser solder head (220) to the precise soldering position under the guidance of the vision system (210) by the second robot (200); and
S83: activating the laser solder head (220) to solder the first lead (11) and the second lead (12) together.

## Patentansprüche

1. Lötsystem, **dadurch gekennzeichnet, dass** es umfasst:
einen ersten Roboter (100), an dem ein erstes Werkzeug (110) und ein zweites Werkzeug (120) angebracht sind;
einen zweiten Roboter (200), an dem ein Laser-Lötkopf (220) angebracht ist;
eine Fixiervorrichtung (300), die so eingerichtet ist, dass sie ein elektrisches Erzeugnis (10) mit einer ersten Zuleitung (11) und einer zweiten Zuleitung (12) fixiert, die verlötet werden sollen; sowie
ein Bilderkennungssystem (210), das so eingerichtet ist, dass es Positionen der ersten Zuleitung (11) sowie der zweiten Zuleitung (11) identifiziert und eine Ausrichtungs-Abweichung zwischen ihnen erfasst;
wobei der erste Roboter (100) so eingerichtet ist, dass er die erste Zuleitung (11) oder/und die zweite Zuleitung (11) mittels des ersten Werkzeugs (110) bewegt, um die Ausrichtungs-Abweichung zu reduzieren, wenn die mittels des Bilderkennungssystem (210) erfasste Ausrichtungs-Abweichung zwischen der ersten Zuleitung (11) und der zweiten Zuleitung (12) größer ist als ein vorgegebener Abweichungswert;
der erste Roboter (100) so eingerichtet ist, dass er die erste Zuleitung (11) und die zweite Zuleitung (12) mittels des zweiten Werkzeugs (120) presst oder hält, wenn die mittels des Bilderkennungssystem (210) erfasste Ausrichtungs-Abweichung zwischen der ersten Zuleitung (11) und der zweiten Zuleitung (12) innerhalb des vorgegebenen Abweichungswertes liegt; und
der zweite Roboter (200) so eingerichtet ist, dass er den Laser-Lötkopf (220), von dem Bilderkennungssystem geführt, an eine vorgegebene Position bewegt, und so eingerichtet ist, dass er die erste Zuleitung (11) und die zweite Zuleitung (12) mittels des Laser-Lötkopfes miteinander verlötet, wenn die Ausrichtungs-Abweichung zwischen der ersten Zuleitung (11) und der zweiten Zuleitung (12) innerhalb des vorgegebenen Abweichungswertes liegt und die erste Zuleitung (11) sowie die zweite Zuleitung (12) mittels des zweiten Werkzeugs (120) gepresst oder gehalten worden sind.

2. Lötsystem nach Anspruch 1, wobei
das zweite Werkzeug (120) so eingerichtet ist, dass es die erste Zuleitung (11) und die zweite Zuleitung (12) presst oder hält, wenn die Ausrichtungs-Abweichung zwischen der ersten Zuleitung (11) und der zweiten Zuleitung (12) mittels des Bilderkennungssystem (210) erfasst wird.

3. Lötsystem nach Anspruch 1 oder 2, wobei
der erste Roboter (100) so eingerichtet ist, dass er die erste Zuleitung (11) oder/und die zweite Zuleitung (12), geführt von dem Bilderkennungssystem (210), mittels des ersten Werkzeugs (110) bewegt, um die Ausrichtungs-Abweichung zwischen der ersten Zuleitung (11) und der zweiten Zuleitung (12) auf den vorgegebenen Abweichungswert zu reduzieren.

4. Lötsystem nach einem der Ansprüche 1 - 3, wobei
das Bilderkennungssystem (210) in den zweiten Roboter (200) integriert ist und mit ihm bewegt wird, um gegenseitige Behinderung des Bilderkennungssystems (210) und des ersten Roboters (100) sowie des zweiten Roboters (200) zu vermeiden.

5. Lötsystem nach einem der Ansprüche 1 - 4, wobei
der erste Roboter (100) einen Drehteller (101) aufweist, an dem das erste Werkzeug (110) und das zweite Werkzeug (120) so angebracht sind, dass das erste Werkzeug (110) oder das zweite Werkzeug (120) durch Drehen des Drehtellers (101) an eine Arbeitsposition gedreht wird.

6. Lötsystem nach einem der Ansprüche 1 - 5, wobei
das elektrische Erzeugnis (10) einen elektrischen Verbinder umfasst, der ein Gehäuse (13), ein erstes Verbindungsstück, das die erste Zuleitung (11) aufweist, sowie ein zweites Verbindungsstück umfasst, das die zweite Zuleitung (12) aufweist, wobei das erste Verbindungsstück und das zweite Verbindungsstück an dem Gehäuse (13) montiert sind.

7. Lötsystem nach einem der Ansprüche 1 - 6, wobei
das Lötsystem eine genaue Löt-Position der ersten Zuleitung (11) und der zweiten Zuleitung (12) auf Basis von Positionen, Formen und Größen der ersten Zuleitung (11) und der zweiten Zuleitung (12) bestimmt, die mittels des Bilderkennungssystem (210) identifiziert werden; und
der zweite Roboter (200) so eingerichtet ist, dass er den Laser-Lötkopf (220), geführt von dem Bilderkennungssystem (210), an die genaue Löt-Position bewegt.

8. Lötverfahren, **dadurch gekennzeichnet, dass** es die folgenden Schritte umfasst:
S10: Bereitstellen des Lötsystems nach einem der Ansprüche 1 - 7;
S20: Fertigstellen einer Montage des elektrischen Erzeugnisses (10) und Fixieren des elektrischen Erzeugnisses(10) an der Fixiervorrichtung (300);
S30: Pressen oder Halten der ersten Zuleitung (11) und der zweiten Zuleitung (12) des elektrischen Erzeugnisses (10), die mittels des zweiten Werkzeugs (120) des ersten Roboters (100) verlötet werden sollen;
S40: Erfassen der Ausrichtungs-Abweichung zwischen der ersten Zuleitung (11) und der zweiten Zuleitung (12) mittels des Bilderkennungssystem (210), und
wenn die erfasste Ausrichtungs-Abweichung größer ist als der vorgegebene Abweichungswert, dann
S50: Lösen der ersten Zuleitung (11) und der zweiten Zuleitung (12) durch Abstellen des zweiten Werkzeugs (120) und Bewegen der ersten Zuleitung (11) und/oder der zweiten Zuleitung (12) mittels des ersten Werkzeugs (110), um die Ausrichtungs-Abweichung zwischen der ersten Zuleitung (11) und der zweiten Zuleitung (12) zu reduzieren;
S60: Entfernen des ersten Werkzeugs (110) von der ersten Zuleitung (11) und der zweiten Zuleitung (12) sowie Pressen oder Halten der ersten Zuleitung (11) und der zweiten Zuleitung (12) mittels des zweiten Werkzeugs (120); sowie
S70: Zurückkehren zu Schritt S40; und
wenn die erfasste Ausrichtungs-Abweichung größer ist als der vorgegebene Abweichungswert, dann
S80: Bewegen des Laser-Lötkopfes (220) an die genaue Löt-Position, geführt von dem Bilderkennungssystem (210), mittels des zweiten Roboters (200) sowie Verlöten des ersten Leiters (11) und des zweiten Leiters (12) miteinander mittels des Laser-Lötkopfes (220).

9. Lötverfahren nach Anspruch 8, wobei der Schritt S80 die folgenden Schritte umfasst:
S81: Identifizieren von Positionen, Formen und Größen der ersten Zuleitung (11) und der zweiten Zuleitung (12) mittels des Bilderkennungssystem (210) sowie Bestimmen der genauen Löt-Position der ersten Zuleitung (11) mit der zweiten Zuleitung (12) auf Basis der identifizierten Positionen, Formen und Größen;
S82: Bewegen des Laser-Lötkopfes (220) an die genaue Löt-Position, geführt von dem Bilderkennungssystem (210), mittels des zweiten Roboters (200); sowie
S83: Aktivieren des Laser-Lötkopfes (220) zum Verlöten der ersten Zuleitung (11) und der zweiten Zuleitung (12) miteinander.

## Revendications

1. Système de brasage,
**caractérisé en ce qu'**il comprend :
un premier robot (100) sur lequel sont montés un premier outil (110) et un deuxième outil (120) ;
un deuxième robot (200) sur lequel est montée une tête de brasage laser (220) ;
un dispositif de fixation (300) adapté pour fixer un produit électrique (10) avec un premier fil (11) et un deuxième fil (12) à braser ; et
un système de vision (210) adapté pour identifier les positions du premier fil (11) et du deuxième fil (12) et pour détecter une tolérance d'alignement entre eux ;
dans lequel
le premier robot (100) est adapté pour déplacer au moins un fil parmi le premier fil (11) et le deuxième fil (12) à l'aide du premier outil (110) pour réduire la tolérance d'alignement quand la tolérance d'alignement entre le premier fil (11) et le deuxième fil (12) détectée par le système de vision (210) est supérieure à une valeur de tolérance prédéterminée ;
le premier robot (100) est adapté pour pousser ou maintenir le premier fil (11) et le deuxième fil (12) à l'aide du deuxième outil (120) quand la tolérance d'alignement entre le premier fil (11) et le deuxième fil (12) détectée par le système de vision (210) est comprise dans la valeur de tolérance prédéterminée ; et
le deuxième robot (200) est adapté pour déplacer la tête de brasage laser (220) à une position prédéterminée sous la direction du système de vision, et est adapté pour braser entre eux le premier fil (11) et le deuxième fil (12) à l'aide de la tête de brasage laser (220) quand la tolérance d'alignement entre le premier fil (11) et le deuxième fil (12) est comprise dans la valeur de tolérance prédéterminée, et le premier fil (11) et le deuxième fil (12) ont été poussés ou maintenus par le deuxième outil (120) .

2. Système de brasage selon la revendication 1, dans lequel
le deuxième outil (120) est adapté pour pousser ou maintenir le premier fil (11) et le deuxième fil (12) quand la tolérance d'alignement entre le premier fil (11) et le deuxième fil (12) est détectée par le système de vision (210) .

3. Système de brasage selon la revendication 1 ou 2, dans lequel
le premier robot (100) est adapté pour déplacer au moins un fil parmi le premier fil (11) et le deuxième fil (12) à l'aide du premier outil (110) sous la direction du système de vision (210), de manière à réduire la tolérance d'alignement entre le premier fil (11) et le deuxième fil (12) à la valeur de tolérance prédéterminée.

4. Système de brasage selon l'une quelconque des revendications 1 à 3, dans lequel
le système de vision (210) est intégré dans le deuxième robot (200) et déplacé avec celui-ci pour éviter une interférence entre le système de vision (210) et le premier robot (100) et le deuxième robot (200).

5. Système de brasage selon l'une quelconque des revendications 1 à 4, dans lequel
le premier robot (100) comporte un disque rotatif (101) sur lequel sont montés le premier outil (110) et le deuxième outil (120), de telle sorte qu'un outil parmi le premier outil (110) et le deuxième outil (120) est pivoté jusqu'à une position de fonctionnement en faisant tourner le disque rotatif (101).

6. Système de brasage selon l'une quelconque des revendications 1 à 5, dans lequel
le produit électrique (10) comprend un connecteur électrique comprenant un boîtier (13), une première pièce de connexion comportant le premier fil (11) et une deuxième pièce de connexion comportant le deuxième fil (12), la première pièce de connexion et la deuxième pièce de connexion étant assemblées au boîtier (13).

7. Système de brasage selon l'une quelconque des revendications 1 à 6, dans lequel
le système de brasage détermine une position de brasage précise du premier fil (11) et du deuxième fil (12) sur la base de positions, de formes et de tailles du premier fil (11) et du deuxième fil (12) identifiées par le système de vision (210) ; et
le deuxième robot (200) est adapté pour déplacer la tête de brasage laser (220) jusqu'à la position de brasage précise sous la direction du système de vision (210).

8. Procédé de brasage,
**caractérisé en ce qu'**il comprend les étapes suivantes :
S10 : fourniture du système de brasage selon l'une quelconque des revendications 1 à 7 ;
S20 : réalisation d'un assemblage du produit électrique (10) et fixation du produit électrique (10) sur le dispositif de fixation (300) ;
S30 : poussée ou maintien du premier fil (11) et du deuxième fil (12) du produit électrique (10) à braser à l'aide du deuxième outil (120) du premier robot (100) ;
S40 : détection de la tolérance d'alignement entre le premier fil (11) et le deuxième fil (12) par le système de vision (210), et
si la tolérance d'alignement détectée est supérieure à la valeur de tolérance prédéterminée, alors
S50 : libération du premier fil (11) et du deuxième fil (12) en retirant le deuxième outil (120), et déplacement d'au moins un fil parmi le premier fil (11) et le deuxième fil (12) par le premier outil (110) pour réduire la tolérance d'alignement entre le premier fil (11) et le deuxième fil (12) ;
S60 : éloignement du premier outil (110) du premier fil (11) et du deuxième fil (12) et poussée ou maintien du premier fil (11) et du deuxième fil (12) à l'aide du deuxième outil (120) ; et
S70 : retour à l'étape S40 ; et
si la tolérance d'alignement détectée est comprise dans la valeur de tolérance prédéterminée, alors
S80 : déplacement de la tête de brasage laser (220) à la position de brasage précise sous la direction du système de vision (210) à l'aide du deuxième robot (200), et brasage entre eux du premier fil (11) et du deuxième fil (12) à l'aide de la tête de brasage laser (220).

9. Procédé de brasage selon la revendication 8, dans lequel l'étape S80 comprend les étapes suivantes :
S81 : identification des positions, des formes et des tailles du premier fil (11) et du deuxième fil (12) à l'aide du système de vision (210), et détermination de la position de brasage précise du premier fil (11) avec le deuxième fil (12) sur la base des positions, des formes et des tailles identifiées ;
S82 : déplacement de la tête de brasage laser (220) à la position de brasage précise sous la direction du système de vision (210) à l'aide du deuxième robot (200) ; et
S83 : activation de la tête de brasage laser (220) pour braser entre eux le premier fil (11) et le deuxième fil (12) .
